# EUROPEAN PATENT APPLICATION

(11) **EP 3 521 007 A1**
(43) Date of publication of application: **07.08.2019**
(21) Application number: 19152447.9
(22) Date of filing: 18.01.2019
(51) Int. Cl.: B32B 5/02, B32B 5/08, B32B 5/26, B32B 7/12, B32B 3/08, H05B 3/36, B32B 7/025, B32B 7/09, D02G 3/12

(54) **HEATABLE FABRIC**

(30) Priority: 06.02.2018 TW 10704164
(71) Applicant: Intelligence Textile Technology Co., Ltd., 10595 Taipei City (TW)
(72) Inventor: CHEN-HSIANG, LIN, Taipei City, Taiwan (R.O.C.) (TW)
(74) Representative: Rapisardi, Mariacristina

(57) **Abstract**

A heatable fabric comprises a heatable cloth, an outer cloth and a transmission line. The heatable cloth is covered with the outer cloth. The transmission line is connected to the heatable cloth. The outer cloth has an outlet for allowing the transmission line to pass from the interior of the outer cloth to the exterior of the outer cloth. The heatable cloth includes at least one signaling yarn. The at least one signaling yarn is connected to the transmission line. The at least one signaling yarn is braided with other yarns to form the heatable cloth. Accordingly, based on the principle of converting part of electric energy into heat energy in the process of transmitting the signal/electricity of the at least one signaling yarn, the present disclosure can achieve the heating/warming effect.

## Description

### TECHNICAL FIELD

The present disclosure relates to a heatable fabric, in particular, to a heatable fabric using a signaling yarn for achieving the heating/warming effect.

### BACKGROUND

With the development of science and technology, manufacturers continue to invest resources in researching new materials, processes, and weaving methods, and to apply them to heatable fabrics which contact the human body, so as to enhance people's quality of life, wherein the heatable fabrics are for example heatable eye masks, hand warmers, heatable gloves and heatable clothes.

Special fiber materials, for example, polyacrylates, acrylic fibers or rayon, instead of the general fiber materials, may be applied to existing heatable clothing. The special fiber materials have better moisture absorption capacities and/or lower specific heat capacities than the those of the general fiber materials, and thus, the special fiber materials can absorb the moisture from the human body and generate heat energy when moisture is released. Therefore, when the user wears the existing heatable clothing added with special fiber materials, it usually has a better heating/warming effect than that of the general clothing.

For example, the existing heating eye masks and hand warmers may be added with the special materials. The special materials produce one-time chemical reactions, for example, irreversible oxidation reactions when they contact air. Therefore, when the user wears the existing heatable eye mask or uses the hand warmer, the existing heating eye mask or hand warmer has the one-time heating/warming effect.

The existing heating fabrics have no signaling yarns. Therefore, the heating/warming effects of the existing heating fabrics are not based on the principle of converting some of the electrical energy into the thermal energy during the signal/electricity transmission of the signaling yarn.

### SUMMARY

Based on at least one embodiment of the present disclosure, the present disclosure provides a heatable fabric that utilizes a signaling yarn to achieve a heating/warming effect.

An embodiment of the present disclosure provides a heatable fabric, and the heatable fabric comprises a heatable cloth, an outer cloth, and a transmission line. The outer cloth covers the heatable cloth. The transmission line is connected to the heatable cloth. The outer cloth has an outlet for allowing the transmission line to penetrate the outer cloth from interior of the outer cloth to exterior of the outer cloth. The heatable cloth has a signaling yarn. The signaling yarn is connected to the transmission line. The signaling yarn is woven with other yarns to form the heatable cloth.

Optionally, the signaling yarn comprises a supporting material having a strength being between 26 strands and 40 strands.

Optionally, the signaling yarn comprises a staple fiber, a sheet conductor and an insulating layer. The staple fiber serves as the supporting material. The sheet conductor enlaces a surrounding surface of the staple fiber in a spiral direction, wherein a length over width ratio of a cross section of the sheet conductor corresponding to the spiral direction is about 10 to 30. The insulating layer surrounds the surrounding surface of the staple fiber to cover the sheet conductor and the staple fiber.

Optionally, a material of the sheet conductor is selected from one of a copper-nickel alloy, a copper-nickel-silicon alloy, a copper-nickel-zinc alloy, a copper-nickel-tin alloy, a copper-chromium alloy, a copper-silver alloy, a nickel-brass alloy, a phosphor bronze alloy, a beryllium copper alloy, a nickel-chromium alloy, a copper-tungsten alloy and a stainless steel.

Optionally, a material of the insulating layer is selected from one of a polytetrafluoroethylene, a polyethylene terephthalate, an ethylene tetrafluoroethylene, a polyvinyl chloride, and a polyethylene.

Optionally, a conductor wire is rolled to provide the sheet conductor, wherein a diameter of a circular cross section of the conductor wire is X, a length of the cross section of the sheet conductor is about 4X, and a width of the cross section of the sheet conductor is about X/5.

Optionally, the heatable cloth and the outer cloth are bonded through a waterproof tape.

Optionally, the waterproof tape covers a connecting portion between the heatable cloth and the transmission line.

Optionally, the heatable fabric comprises a storage bag, wherein the storage bag is coupled to the outer cloth and disposed on one side of the heatable cloth for accommodating the transmission line.

Optionally, the outer cloth has a lug structure.

In this way, based on the principle of converting some of the electrical energy into thermal energy during the signal/electricity transmission of the signaling yarn, the heatable fabric according to the present can achieve the heating/warming effect.

### BRIEF DESCRIPTION OF THE DRAWINGS

To describe technical solutions in embodiments of the present disclosure or in the prior art more clearly, the following briefly introduces the accompanying drawings required for describing the embodiments. Apparently, the accompanying drawings in the following description show merely some embodiments of the present disclosure. The embodiments can be used by persons skilled in the art to obtain other drawings according to the accompanying drawings without creative efforts.
FIG. 1 is a three-dimensional schematic view of a heatable fabric according to an embodiment of the present disclosure;
FIG. 2 is a sectional schematic view of a heatable fabric according to an embodiment of the present disclosure;
FIG. 3 is a schematic view showing a heatable cloth and a lower layer of an outer cloth are bonded through a waterproof tape according to an embodiment of the present disclosure;
FIG. 4 is a detailed view of a heatable fabric according to an embodiment of the present disclosure;
FIG. 5 is a three-dimensional schematic view of a signaling yarn according to an embodiment of the present disclosure;
FIG. 6 is a sectional schematic view of a signaling yarn according to an embodiment of the present disclosure;
FIG. 7 is a schematic view of an implementation method of a sheet conductor according to an embodiment of the present disclosure; and
FIG. 8 is a flowchart of a manufacturing method of the signaling yarn according to an embodiment of the present disclosure.

### DETAILED DESCRIPTION OF THE PREFERRED EMBODIMENTS

In order to fully understand the purpose, features, and effects of the present disclosure, a detailed description of the present disclosure will be given by the following specific examples and in conjunction with the accompanying drawings.

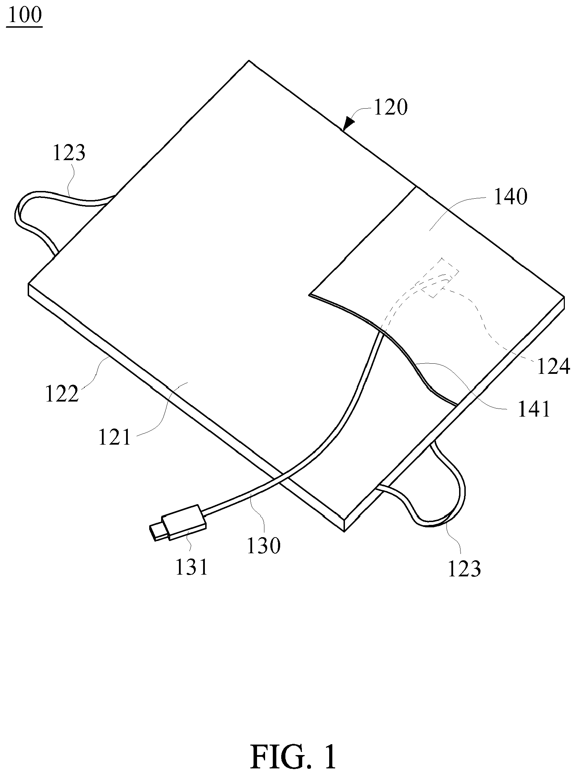

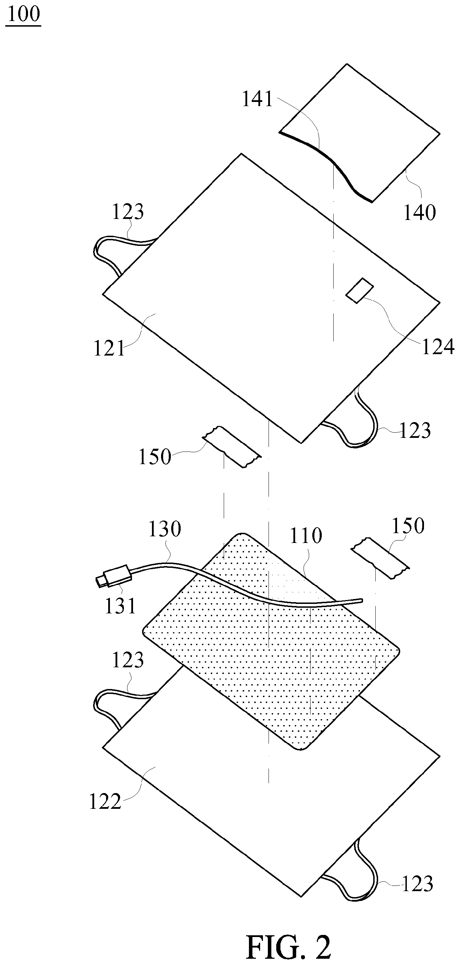

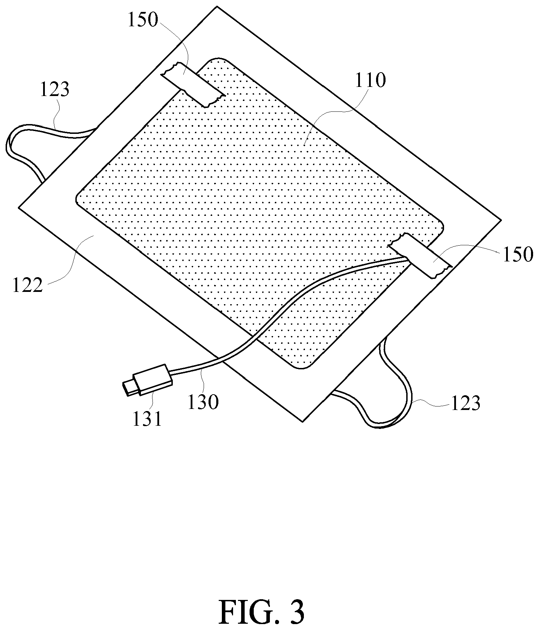

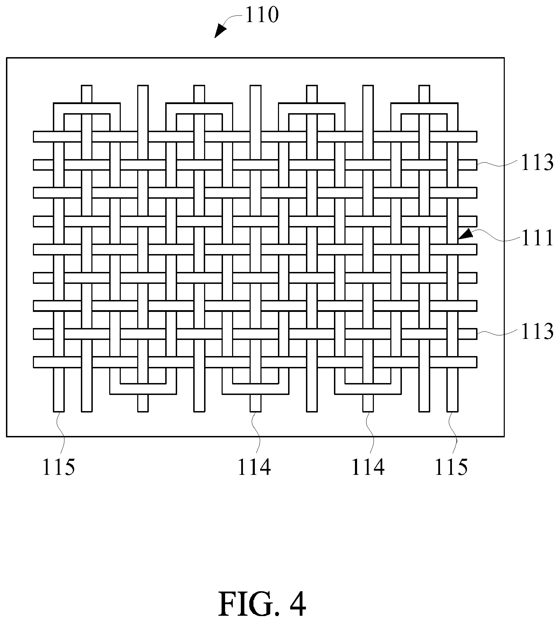

Please refer to FIGS. 1 to 4. FIG. 1 is a three-dimensional schematic view of a heatable fabric according to an embodiment of the present disclosure. FIG. 2 is a sectional schematic view of a heatable fabric according to an embodiment of the present disclosure. FIG. 3 is a schematic view showing a heatable cloth and a lower layer of an outer cloth are bonded through a waterproof tape according to an embodiment of the present disclosure. FIG. 4 is a detailed view of a heatable fabric according to an embodiment of the present disclosure.

As shown in FIGS. 1 to 4, the heatable fabric 100 comprises a heatable cloth 110, an outer cloth 120, a transmission line 130, a storage bag 140 and a waterproof tape 150. The heatable cloth 110 is formed by weaving the signaling yarns 111 and other yarns 112, and the heatable cloth 110 is used to heat the heatable fabric 100. The outer cloth 120 has an upper layer 121 and a lower layer 122 to completely cover the heatable cloth 110. The storage bag 140 is sewn to the upper layer 121 or the lower layer 122 of the outer cloth 120. A portion of the transmission line 130 extends from interior of the outer cloth 120 to exterior of the outer cloth 120 via the outlet 124 of the outer cloth 120. The heatable cloth 110 is bonded with the outer cloth 120 through waterproof tape 150. Accordingly, based on the principle of converting some of the electrical energy into the thermal energy during the signal/electricity transmission of the signaling yarn, the heatable fabric 100 achieves the heating/warming effect.

A method of manufacturing the heatable fabric 100 is as follows. First, the heatable cloth 110 is placed between the upper layer 121 and the lower layer 122 of the outer cloth 120. Then, a portion of the transmission line 130 and the USB connector 131 are pulled from the interior of the outer cloth 120 to the exterior of the outer cloth 120 through the outlet 124 at the upper layer 121 or the lower layer 122 of the outer cloth 120, wherein the transmission line 130 is connected to the heatable cloth 110 at the interior of the outer cloth 120. Then, at least one of the upper layer 121 and the lower layer 122 of the heatable cloth 110 is bonded by the adhesion of the waterproof tape 150, wherein the waterproof tape 150 covers a connecting portion between the heatable cloth 110 and the transmission line 130. Then, edges of the upper 121 and the lower 122 of the outer cloth 120 are sewn. Finally, the storage bag 140 is sewn to the upper 121 or the lower 122 of the outer cloth 120, and the portion of the transmission line 130 and the USB connector 131 are pulled out of the storage bag 140 via a bag opening 141 of the storage bag 140 to form the heatable fabric 100.

In the embodiment, the heatable cloth 110 is bonded with the outer cloth 120 through the waterproof tape 150, so that the heatable cloth 110 and the outer cloth 120 are not easy to separate during the water washing process. However, the present disclosure is not limited thereto. For example, the heatable cloth 110 and the outer cloth 120 can be bonded through a non-waterproof tape. For example, in other possible embodiments, the heatable cloth 110 and the outer cloth 120 can be bonded by means other than adhesive tape. For example, in other possible embodiments, the heatable cloth 110 can be sewn to the outer cloth 120.

In the embodiment, the number of the waterproof tape 150 is two and the two waterproof tapes 150 respectively adhere to two opposite sides of the heatable cloth 110. One of the waterproof tapes 150 covers the connecting portion between the heatable cloth 110 and the transmission line 130, so that the heatable cloth 110 is stably fixed on the heatable cloth 110, the heatable cloth 110 and the transmission line 130 are not easy to separate during the washing process, and it is hard to make the connecting portion of the heatable cloth 110 and the transmission line 130 shorted after the washing process. However, the present disclosure is not limited thereto. For example, the number of the waterproof tape 150 can be a number other than two, and the heatable cloth 110 can bonded to the outer cloth 120 in other configurations. For example, in other possible embodiments, the waterproof tapes 150 do not cover the connecting portion of the heatable cloth 110 and the transmission line 130.

In the embodiment, the heatable fabric 100 includes a storage bag 140 to accommodate the transmission line 130. For example, the user can put the transmission line 130 in the storage bag 140 via the bag opening 141 of the storage bag 140 before performing the washing process to ensure that the transmission line 130 is not easy to be damaged during the washing process. However, the present disclosure is not limited thereto. For example, in other possible embodiments, the heatable fabric 100 does not have the storage bag 140.

In the embodiment, the outlet 124 is approximately located at a middle position of the upper right corner of the outer cloth 120, and the bag opening 141 is located at a lower end of the storage bag 140. However, the present disclosure is not limited thereto. For example, the outlet 124 can be located at a middle or edge position of the outer cloth 120. For example, the bag opening 141 can be located elsewhere at storage bag 140.

In the embodiment, the width of the outlet 124 is designed to be slightly larger than or equal to the width of the USB connector 131 of the transmission line 130, such that it is convenient to make the USB connector 131 pass the outlet 124 during accommodation. However, the present disclosure is not limited thereto. For example, based on other considerations, the width of the outlet 124 can be designed to be less than or greater than the width of the USB connector 131 of the transmission line 130.

In the embodiment, the transmission line 130 has the USB connector 131, so that an external electronic device can be connected to the transmission line 130 via the insertion of the USB connector 131. However, the present disclosure is not limited thereto. For example, the transmission line 130 can use other types of connectors instead of the USB connector. For example, in other possible embodiments, the transmission line 130 does not have the USB connector 131.

In the embodiment, the outer cloth 120 has a lug structure 123 for facilitating to wear on the ear of a user or to bind the heatable fabric 100 at a specific human body part (such as the user's abdomen, back, legs, etc.) by a fixing tool (such as rubber band, rope, thread, etc.) which is able to pass the lug structure 123. For example, if the heatable fabric 100 of the embodiment is used as a heatable eye mask, the user can wear the outer cloth 120 on an ear of the user by using the lug structure 123, so that the eye contacted the outer cloth 120 can be warmed/heated. For example, if the heatable fabric 100 of the embodiment is used as a hand warmer, a user can bind the heatable fabric 100 to a specific human body part by a fixing tool capable of passing the lug structure 123, so that the specific human body part can be warmed/heated. For example, the lug structure 123 can have a shape different from that of the embodiment and be disposed at a different position from the embodiment.

In other possible embodiments, the outer cloth 120 does not have the lug structure 123. For example, the outer cloth 120 can be configured as a part of heatable clothing. The heatable clothing usually does not require the lug structure 123, so that the outer cloth 120 also does not require the lug structure 123. For example, the outer cloth 120 can be configured as a part of a glove. The glove usually does not require the lug structure 123, so that the outer cloth 120 also does not need require the lug structure 123.

In the embodiment, as clearly shown in FIG. 4, the manner of interweaving the signaling yarn 111 and the other yarns 112 of the heatable cloth 110 are described as follows. The heatable cloth 110 includes at least one signaling yarn 111 and at least one layer. The other yarns 112 include a plurality of warp yarns 113 and a plurality of weft yarns 114. The plurality of warp yarns 113 are arranged along a first direction X and extend along a second direction Y. The plurality of weft yarns 114 are arranged along a second direction Y and extend in the first direction X. Each warp yarn 113 is interlaced with the plurality of weft yarns 114 in the second direction Y. Each weft yarn 114 is interlaced with the plurality of warp yarns 113 in the first direction X. At least one of the warp yarns 113 and the weft yarns 114 is made of Spandex/Elastane fibers, and the heatable cloth 110 is not limited to have one layer. For example, the heatable cloth 110 may have double or multiple layers. The manner of interweaving the warp yarns 113 and the weft yarns 114 is also not limited in the embodiment of FIG. 4, and the interweaving method can be, for example, plain weave, twill weave, satin weave, or the like. The signaling yarn 111 is disposed on the heatable cloth 110, wherein the signaling yarns 111 are interlaced with a part of the warp yarns 113 and a part of the weft yarns 114, so that the signaling yarns 111 are fixed to the heatable cloth 110 by the interlacing of the warp yarns 113 and the weft yarns 114.

For example, in other possible embodiments, the signaling yarns 111 can be laid on the heatable cloth 110 in a wavy or sinusoidal shape to provide an extending space, such that the heatable cloth 110 is not broken easily during pulling. Persons having ordinary skill in the art can understand that, depending on the heating effect, cost, extending space, or other considerations, weaving manners of the signaling yarn 111 and the other yarns 112 of the heatable cloth 110 can have various changes, and the present disclosure does not limit the weaving manner disclosed in the embodiment.

In the embodiment, the signaling yarn 111 has two connecting portions 115. One of the connecting portions 115 is used to connect the transmission line 130, and the other connecting portion 115 is connected to the signal receiving/transmitting end (such as a headset, etc.). However, the present disclosure is not limited thereto. For example, if there are a plurality of signaling yarns 111, the number of the connecting portions 115 will increase correspondingly. For example, the connecting portion 115 can be located at other positions of the heatable cloth 110 as the setting manner of the signaling yarn 111 in the heatable cloth 110 is changed.

Accompanying with the drawings, the follows will further describe the signaling yarn 111 in the embodiments of the present disclosure.

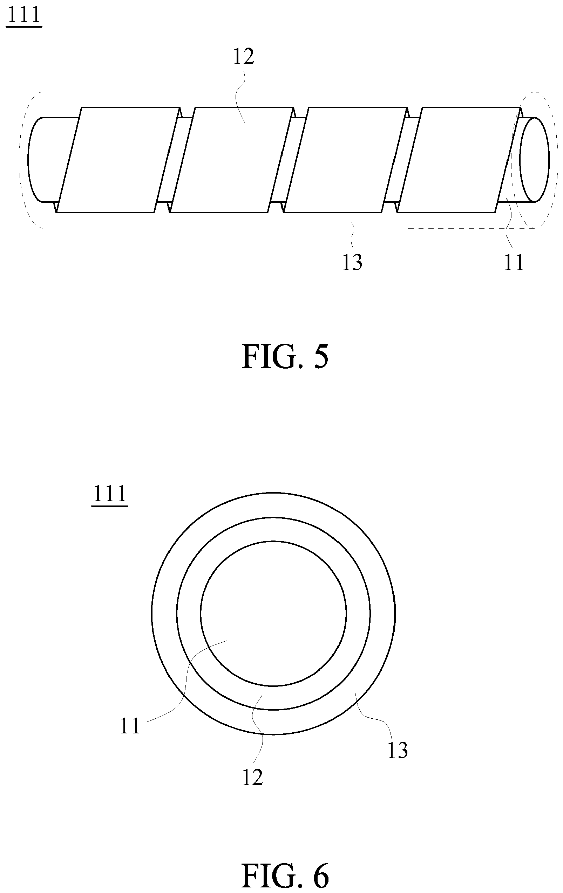

Referring to Fig. 5, Fig 5 is a three-dimensional schematic view of a signaling yarn according to an embodiment of the present disclosure. In the embodiment, the signaling yarn 111 has a staple fiber 11, a sheet conductor 12 and an insulating layer 13. The staple fiber 11 is provided as a support material for supporting the sheet conductor 12 which is enlacing the staple fiber 11. The sheet conductor 12 is enlacing a surrounding surface of the staple fiber 11 in a spiral direction to increase the strength of the signaling yarn 111. The insulating layer 13 is surrounding the surrounding surface of the staple fiber 11 to cover the sheet conductor 12 and the staple fiber 11.

Optionally, the strength of the signaling yarn 111 can be increased by choosing the strength of the staple fiber 11 and /or a length over width ratio of a cross section of the sheet conductor 12 corresponding to the spiral direction. In the embodiment, the strength of the staple fiber 11 is 30 strands and the length over width ratio of the cross section of the sheet conductor 12 corresponding to the spiral direction is about 20, but the present disclosure is not limited thereto. For example, the strength of the staple fiber 11 is 26, 28 or 40 strands, or the length over width ratio of the cross section of the sheet conductor 12 corresponding to the spiral direction is between 10 and 30. For example, after ten consecutive days of washing test (general test standard is 7 days), the signaling yarn 111 will not have the breakage problem, and through the tensile test results, the signaling yarn 111 can withstand about 15 kg pulling force (general standard is 3 kg weight).

In the embodiment, a material of the staple fiber 11 is one of a polyester, a polyamide, a polyacrylic, a polyethylene, a polypropylene, a cellulose, a protein, an elastomeric, a polytetrafluoroethylene, a poly-p-phenylenebenzobisthiazole (PBO), a polyetherketone, a carbon and a glass fiber. However, the present disclosure does not limit the type of the staple fiber 11, and the type of the staple fiber 11 is selected according to the actual requirements.

In the embodiment, a material of the sheet conductor 12 is alloy, such as copper-nickel alloy, copper-tin alloy, copper-nickel-silicon alloy, copper-nickel-zinc alloy, copper-nickel-tin alloy, copper-chromium alloy, copper-silver alloy, nickel-brass alloy, phosphor bronze alloy, beryllium copper alloy, nickel-chromium alloy, copper-tungsten alloy, stainless steel and other commercially conductive alloys, but the present disclosure is not limited thereto. In different embodiments, the type of alloy can have different options. For example, portions of the signaling yarn 111 can be further used as a touch sensing element in a touch control textile. One end of the signaling yarn 111 receives a scanning signal and the other end of the signaling yarn 111 transmits a touch sensing signal. Therefore, a smaller resistance value of the alloy can be selected as the material of the sheet conductor 12.

In the embodiment, a material of the insulating layer 13 is selected from polytetrafluoroethylene, ethylene tetrafluoroethylene, polyethylene terephthalate, polyvinyl chloride, polyethylene and other polymer insulation materials, and the present disclosure is not limited thereto. The material of the sheet conductor 12 and the insulating layer 13 can be selected according to the actual demand. For example, the signaling yarn 1' can be used as a heating element for heating textile, so the sheet conductor 12 can be made of an alloy with a large resistance value, and the insulating layer 13 can be made of an insulating material with high heat resistance (for example, polytetrafluoroethylene).

Referring to FIG. 5 and FIG. 6, FIG. 6 is a sectional schematic view of a signaling yarn according to an embodiment of the present disclosure. In the sectional view of the signaling yarn 111', according to the descriptions above, the staple fiber 11 is provided as the support material of a central layer, and the other two layers except the staple fiber 11 are sequentially the sheet conductor 12 and insulating layer 13. However, the signaling yarn 111' of the embodiment has only one sheet conductor 12 and one insulating layer 13, but the present disclosure is not limited thereto. In other embodiments, there can be more layers of sheet conductors and insulating layers, for example, six layers or eight layers, and the number of layers can vary depending on the actual demands.

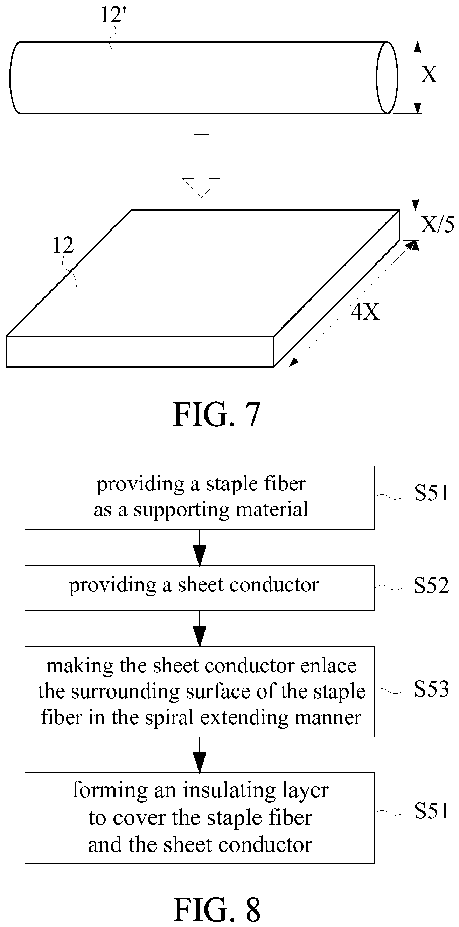

Next, referring to FIG. 7, FIG. 7 is a schematic view of an implementation method of a sheet conductor according to an embodiment of the present disclosure. In the embodiment, the length and the width of the cross section of the sheet conductor 12 are respectively about 4X and X/5, wherein X is the diameter of the circle section of the conductor wire 12'. The conductor wire 12' is rolled to form the sheet conductor 12. However, the formation of the sheet conductor 12 is not used to limit the present disclosure. In other words, there are different implementations to realize the sheet conductor 12 in the embodiment of the present disclosure.

At last, please refer to Fig. 5 and Fig. 8, Fig. 8 is a flowchart of a manufacturing method of the signaling yarn according to an embodiment of the present disclosure. First, in step S81, a staple fiber 11 is provided as a supporting material, wherein the staple fiber 11 has a strength being between 26 strands and 40 strands. Next, in step S82, a sheet conductor 12 is provided. Next, in step S83, the sheet conductor 12 is enlacing a surrounding surface of the staple fiber 11 in the spiral direction, wherein a length over width ratio of a cross section of the sheet conductor 12 corresponding to the spiral direction is about 10 to 30, and preferably about 20. Finally, in step S84, an insulating layer 13 is formed and enlacing the surrounding surface of the staple fiber 11 to cover the staple fiber 11 and the sheet conductor 12, and thus the signaling yarn 111' of FIG. 5 is manufactured.

In addition, it should be noted that the shape drawn by the heatable fabric 100 in this embodiment is only schematic, and the heatable fabric 100 can be implemented in other shapes according to actual needs. For example, when the heatable fabric 100 is a glove, the heatable fabric 100 is designed in a glove shape for being worn by a user's hand.

To sum up, based on the principle of converting some of the electrical energy into thermal energy during the signal/electricity transmission of the signaling yarn, the heatable fabric according to the present disclosure can achieve the heating/warming effect.

## Claims

1. A heatable fabric (100), comprising:
a heatable cloth (110);
an outer cloth (120), covering the heatable cloth (110); and
a transmission line (130), connected to the heatable cloth (110), having an outlet (124) for allowing the transmission line (130) to penetrate the outer cloth (120) from interior of the outer cloth (120) to exterior of the outer cloth (120);
wherein the heatable cloth (110) has at least one signaling yarn (111), the signaling yarn (111) is connected to the transmission line (130), and the signaling yarn (111) is woven with other yarns (112) to form the heatable cloth (110).

2. The heatable fabric of claim 1, wherein the signaling yarn (111) comprises a supporting material having a strength being between 26 strands and 40 strands.

3. The heatable fabric of claim 2, wherein the signaling yarn (111) comprises:
a staple fiber (11), serving as the supporting material;
a sheet conductor (12), enlacing a surrounding surface of the staple fiber (11) in a spiral direction, wherein a length over width ratio of a cross section of the sheet conductor (12) corresponding to the spiral direction is about 10 to 30; and
an insulating layer (13), surrounding the surrounding surface of the staple fiber (11) to cover the sheet conductor (12) and the staple fiber (11).

4. The heatable fabric of claim 3, wherein a material of the sheet conductor (12) is selected from one of a copper-nickel alloy, a copper-nickel-silicon alloy, a copper-nickel-zinc alloy, a copper-nickel-tin alloy, a copper-chromium alloy, a copper-silver alloy, a nickel-brass alloy, a phosphor bronze alloy, a beryllium copper alloy, a nickel-chromium alloy, a copper-tungsten alloy and a stainless steel.

5. The heatable fabric of claim 3, wherein a material of the insulating layer (13) is selected from one of a polytetrafluoroethylene, a polyethylene terephthalate, an ethylene tetrafluoroethylene, a polyvinyl chloride, and a polyethylene.

6. The heatable fabric of claim 3, wherein a conductor wire (12') is rolled to provide the sheet conductor (12), wherein a diameter of a circular cross-section of the conductor wire (12') is X, a length of the cross section of the sheet conductor is about 4X, and a width of the cross section of the sheet conductor (12) is about X/5.

7. The heatable fabric of claim 1, wherein the heatable cloth (110) and the outer cloth (120) are bonded through a waterproof tape.

8. The heatable fabric of claim 7, wherein the waterproof tape (150) covers a connecting portion (115) between the heatable cloth (110) and the transmission line (130).

9. The heatable fabric of claim 8, further comprising a storage bag (140), wherein the storage bag is coupled to the outer cloth (120) and disposed on one side of the heatable cloth (110) for accommodating the transmission line (130).

10. The heatable fabric of claim 1, further comprising a storage bag (140) coupled to the outer cloth (120) and disposed on one side of the heatable cloth (110) to store the transmission line (130).

11. The heatable fabric of claim 1, wherein the outer cloth (120) has a lug structure (123).
